# EUROPEAN PATENT SPECIFICATION

(11) **EP 4 327 915 B1**
(45) Date of publication and mention of the grant of the patent: **09.09.2026**
(21) Application number: 22791616.0
(22) Date of filing: 08.04.2022
(51) Int. Cl.: B01D 53/14, B01D 53/62, B01D 53/96, C01B 32/50

(54) **CARBON DIOXIDE RECOVERING METHOD AND CARBON DIOXIDE RECOVERING DEVICE**
KOHLENDIOXIDWIEDERGEWINNUNGSVERFAHREN UND KOHLENDIOXIDWIEDERGEWINNUNGSVORRICHTUNG
PROCÉDÉ ET DISPOSITIF DE RÉCUPÉRATION DE DIOXYDE DE CARBONE

(30) Priority: 22.04.2021 JP 2021072829
(43) Date of publication of application: 28.02.2024
(60) Divisional application: 26193835.1 / 4 803 485
(73) Proprietor: MITSUBISHI GAS CHEMICAL COMPANY, INC., Chiyoda-ku Tokyo 100-8324 (JP)
(72) Inventor: KOUNO, Kazuki, Hiratsuka-shi, Kanagawa 254-0016 (JP); KAWASHIMA, Yuki, Hiratsuka-shi, Kanagawa 254-0016 (JP)
(74) Representative: Hoffmann Eitle
(86) International application number: PCT/JP2022/017329
(87) International publication number: WO 2022/224842

(56) References cited:
- WO-A1-2020/008169
- JP-A- 2012 030 224
- JP-A- 2017 031 046
- JP-A- 2019 166 514
- MCGURK STEPHEN J ET AL: "Microwave swing regeneration of aqueous monoethanolamine for post-combustion CO2capture", APPLIED ENERGY, ELSEVIER SCIENCE PUBLISHERS, GB, vol. 192, 14 February 2017 (2017-02-14), pages 126 - 133, XP029940353, ISSN: 0306-2619, DOI: 10.1016/J.APENERGY.2017.02.012
- BOUGIE FRANCIS; FAN XIANFENG: "Analysis of the Regeneration of Monoethanolamine Aqueous Solutions by Microwave Irradiation", ENERGY PROCEDIA, ELSEVIER, NL, vol. 142, 31 January 2018 (2018-01-31), NL , pages 3661 - 3666, XP085334744, ISSN: 1876-6102, DOI: 10.1016/j.egypro.2017.12.259

## Description

### Technical Field

The present invention relates to a method for capturing carbon dioxide and a carbon dioxide capture system.

### Background Art

From a viewpoint of global warming issues, there is a need to reduce carbon dioxide.

One of methods for reducing carbon dioxide is technology that effectively captures a high concentration (about 10 to 30% by volume) of carbon dioxide from exhaust gases exhausted from a thermal power plant and so on, and stores it by burying into the ground and the sea (CCS: Carbon dioxide Capture and Storage). The technology regarding carbon dioxide absorbents used in CCS includes, for example, those described in Patent Literatures 1 and 2.

In Patent Literature 1, described is a method for capturing carbon dioxide by using specific alkanolamines as the carbon dioxide absorbent.

In Patent Literature 2, described is that a carbon dioxide absorption liquid containing carbon dioxide chemoabsorbent amines having a nitrogen-hydrogen bond and a tertiary amine solvent not having the nitrogen-hydrogen bond is used as the carbon dioxide absorbent.

In recent years, the technology of directly capturing carbon dioxide at a low concentration (about 0.04% by volume) from the air (DAC: Direct Air Capture) has gained attention. The technology with respect to the carbon dioxide absorbent used in DAC includes, for example, one described in Patent Literature 3.

In Patent Literature 3, described is an absorbent of carbon dioxide from the air, containing an alkylamine substituted by a hydroxy group or an amino group which may be substituted.

In Patent Literature 4, described is a comparison between microwave regeneration and conventional thermal regeneration for post combustion carbon dioxide capture.

In Patent Literature 5, described is a method for regenerating a carbon dioxide lean solvent from a carbon dioxide rich solvent, comprising the provision of a carbon dioxide rich solvent and the application of microwaves to the carbon dioxide rich solvent to form a carbon dioxide lean solvent.

In Patent Literature 6, described is the use of monoethanolamine and microwaves to release the absorbed carbon dioxide. Specifically, the regeneration of monoethanolamine aqueous solutions by microwaves was tested with varying amine concentrations.

In Patent Literature 7, described is a specific carbon dioxide generating agent and a method for generating carbon dioxide using said agent. The carbon dioxide is generated by reacting or heating [3-(aminomethyl) benzyl ] carbamic acid, [2-(aminomethyl) benzyl ] carbamic acid or [4-(aminomethyl) benzyl ] carbamic acid with an acid.

In Patent Literature 8, described is a method for generating carbon dioxide from an absorption material by the use of electromagnetic waves.

### Citation List

### Patent Literature

PTL1: JP2008-13400 A
PTL2: JP 2017-104776 A
PTL3: JP 2017-031046 A
PTL 4: McGurk et al.: "Microwave swing regeneration of aqueous monoethanolamine for post-combustion CO2 capture", Appl. Energy, GB, vol. 192, pages 126-133
PTL5: WO 2020/008169 A1
PTL6: Bougie Francis; Fan Xianfeng: "Analysis of the Regeneration of Monoethanolamine Aqueous Solutions by Microwave Irradiation", Energy Procedia, Elsevier, NL, vol. 142, pages 3661-3666,
PTL7: JP 2017 031046 A
PTL8: JP 2019 166514 A

### Summary of Invention

### Technical Problem

Carbon dioxide absorbents using amine compounds, such as those described in Patent Literatures 1 to 3, have had high carbon dioxide desorption temperatures and required prolonged time application of high temperatures to desorb carbon dioxide.

When applying high temperatures to the carbon dioxide absorbents for the prolonged time, there has been concerns, for example, that the amine compounds will deteriorate or energy consumption will increase.

The present invention was made in view of the above circumstances, and provides a method for capturing carbon dioxide and a carbon dioxide capture system, which can lower the carbon dioxide desorption temperature.

### Solution to Problem

The present inventors made intensive studies in order to solve the above problems. As a result, the present inventors have found that electromagnetic waves are irradiated to desorb carbon dioxide from the amine compounds, thereby lowering the carbon dioxide desorption temperature, and thus have completed the present invention.

That is, according to the present invention, the following method for capturing carbon dioxide and the carbon dioxide capture system are provided.

The present invention provides a method for capturing carbon dioxide comprising a step (A) of irradiating a reaction product (c) of an amine compound (a) and a gas (b) comprising carbon dioxide with electromagnetic waves to desorb the carbon dioxide from the reaction product (c), and a step (B) of preparing the reaction product (c) prior to the step (A), wherein
in the step (B), a carbon dioxide absorbent comprising the amine compound (a) is contacted with the gas (b) to obtain the reaction product (c), wherein the reaction product (c) is in a solid state at 23°C,
wherein, between step (B) and the step (A), the amine compound (a) and the reaction product (c) are separated.

According to an embodiment of the present invention, the gas (b) is air.

According to an embodiment of the present invention, the molecular weight of the amine compound (a) is 50 or more and 1,000 or less.

According to an embodiment of the present invention, a maximum carbon dioxide release temperature of the amine compound (a) is 150°C or less as measured by the following method,
the method comprising:
heating the amine compound (a) with carbon dioxide absorbed from 23°C to 250°C at a heating rate of 10°C/minute; measuring a temperature at which an endothermic amount associated with desorption of the carbon dioxide reaches a maximum; and taking the temperature as the maximum carbon dioxide release temperature.

According to an embodiment of the present invention, an amine value of the amine compound (a) is 500 mgKOH/g or more and 1,500 mgKOH/g or less wherein the amine value is measured as explained in the specification.

According to an embodiment of the present invention, the electromagnetic waves are at least one type selected from the group consisting of microwaves, ultraviolet light, infrared light, gamma rays, electron beams, and X-rays.

According to an embodiment of the present invention, in the step (A), a surface temperature of the reaction product (c) is 35°C or more and 120°C or less.

The present invention further provides a carbon dioxide capture system, comprising
a housing part for housing a reaction product (c) of an amine compound (a) and a gas (b) containing carbon dioxide, a separation part to separate amine compound (a) and reaction product (c), and
an electromagnetic wave irradiation part for irradiating the reaction product (c) with electromagnetic waves,
wherein the carbon dioxide capture system is configured to irradiate a reaction product that is in a solid state at 23°C.

According to an embodiment of the present invention, the electromagnetic waves are at least one type selected from the group consisting of microwaves, ultraviolet light, infrared light, gamma rays, electron beams, and X-rays.

The present invention further provides the use of the carbon dioxide capture system in the method for capturing carbon dioxide.

### Advantageous Effects of Invention

According to the present invention, provided can be a method for capturing carbon dioxide and a carbon dioxide capture system, which can lower a carbon dioxide desorption temperature.

### Brief Description of Drawings

[Fig. 1] Fig. 1 is a schematic diagram showing an example of a carbon dioxide capture system with respect to the present disclosure.
[Fig. 2] Fig. 2 is a schematic diagram showing an example of the carbon dioxide capture system with respect to the present disclosure.
[Fig. 3] Fig. 3 is a schematic diagram showing an example of the carbon dioxide capture system with respect to the present invention.

### Description of Embodiments

Embodiments of the present invention (hereinafter, simply referred to as "the present embodiments") will be described in detail. The following embodiments are examples to explain the present invention and do not limit the contents of the present invention. The present invention can be implemented with appropriate modifications within the scope of the claims. In the present embodiments, it is considered that provisions that are preferred can be adopted arbitrarily, and combinations of preferred ones are more preferred. In the present embodiments, description of "XX to YY" means "XX or more and YY or less".

### [Method for Capturing Carbon Dioxide]

A method for capturing carbon dioxide with respect to the present invention comprises a step (A) of irradiating a reaction product (c) of an amine compound (a) and a gas (b) containing carbon dioxide with electromagnetic waves to desorb carbon dioxide from the reaction product (c), and a step (B) of preparing the reaction product (c) prior to the step (A), wherein in the step (B), a carbon dioxide absorbent comprising the amine compound (a) is contacted with the gas (b) to obtain the reaction product (c), wherein the reaction product (c) is in a solid state at 23°C, wherein, between the step (B) and the step (A), the amine compound (a) and the reaction product (c) are separated.

According to the method for capturing carbon dioxide with respect to the present invention, a carbon dioxide desorption temperature can be lowered. According to the method for capturing carbon dioxide with respect to the present invention, this allows to perform desorption of carbon dioxide at a lower temperature compared with the desorption of carbon dioxide by heating using hot air performed conventionally, resulting in suppressing deterioration of a carbon dioxide absorbent comprising the amine compound (a) to improve repeated usability of the carbon dioxide absorbent.

### <Step (A)>

In the step (A), by irradiating the reaction product (c) with the electromagnetic waves, the carbon dioxide is desorbed from the reaction product (c).

The electromagnetic waves are not limited as long as it makes possible to desorb carbon dioxide from the reaction product (c) by irradiation, but include, e.g., at least one type selected from the group consisting of microwaves, ultraviolet light, infrared light, gamma rays, electron beams, and X-rays. Among these, as the electromagnetic waves, preferable is at least one type selected from the group consisting of the microwaves and the ultraviolet light, and more preferable is the microwaves.

In the present description, the microwaves are a generic term for electromagnetic waves with 100 µm to 1 m wavelengths and 300 MHz to 3 THz frequencies.

The microwaves can be generated from a microwave irradiation source (microwave oscillator (magnetron)). The microwave irradiation source can be used in either a single-mode system or a multi-mode system.

Microwave irradiation conditions (wavelengths, power output, irradiation time, etc.) are not limited, and can be appropriately adjusted in consideration of the carbon dioxide desorption temperature, an amount of throughput, etc.

Power output of the microwave irradiation source can be appropriately adjusted depending on the carbon dioxide desorption temperature, the amount of throughput, etc., and is not limited, but is, e.g., 1 W or more and 300 KW or less for 1 g of the reaction product (c), preferably 1 W or more and 1 KW or less.

Frequencies of microwaves generated from the microwave irradiation source can be appropriately adjusted depending on the carbon dioxide desorption temperature and the amount of throughput, etc., and are not limited, but are, e.g., 0.1 GHz or more, preferably 0.5 GHz or more, more preferably 1.0 GHz or more, even more preferably 1.5 GHz or more, still more preferably 2.0 GHz or more, and are, e.g., 30 GHz or less, preferably 25 GHz or less, more preferably 5.0 GHz or less, even more preferably 3.0 GHz or less.

In addition, the frequencies of microwaves generated from the microwave irradiation source are, in consideration of industrially usable frequencies, preferably frequencies that are permitted for industrial use as a ISM (Industry-Science-Medical) band, and specifically, more preferable is a 915 MHz band (910 MHz to 920 MHz), a 2.45 GHz band (2.40 GHz to 2.50 GHz), a 5.8 GHz band (5.725 GHz to 5.875 GHz), or a 24 GHz band (24.0 GHz to 24.25 GHz), even more preferable are the 915 MHz band (910 MHz to 920 MHz) or the 2.45 GHz band (2.40 GHz to 2.50 GHz), still more preferable are the 2.45 GHz band (2.40 GHz to 2.50 GHz).

The ultraviolet light can be generated, for example, from an ultraviolet irradiation device equipped with e.g., a high-pressure mercury lamp, a low-pressure mercury lamp, or the like.

The irradiation conditions (wavelengths, illuminance, irradiation time, etc.) of the ultraviolet light are not limited, and can be appropriately adjusted in consideration of the carbon dioxide desorption temperature, the amount of throughput, etc.

An integrated amount of light of the ultraviolet (illuminance (mW/cm²) × time (seconds)) can be appropriately adjusted depending on the carbon dioxide desorption temperature, the amount of throughput, etc., and is not limited, but is, e.g., 100 (mJ/cm²) or more and 100,000 (mJ/cm²) or less, preferably 100 (mJ/cm²) or more and 50,000 (mJ/cm²) or less, with respect to 1 g of the reaction product (c).

The wavelengths of ultraviolet light generated from the ultraviolet irradiation device can be appropriately adjusted depending on the carbon dioxide desorption temperature, the amount of throughput, etc., and are, e.g., 10 nm or more, preferably 100 nm or more, more preferably 200 nm or more, even more preferably 250 nm or more, and are, e.g., 400 nm or less, preferably 380 nm or less, more preferably 370 nm or less. Above all, so-called near-ultraviolet light of 200 nm or more and 380 nm or less is preferable.

The irradiation time of electromagnetic waves to the reaction product (c) can be appropriately adjusted depending on a type of the electromagnetic waves used, the carbon dioxide desorption temperature, the amount of throughput, etc., and is not limited, but is, e.g., 1 minute or more, preferably 10 minutes or more, more preferably 30 minutes or more, and is, e.g., 24 hours or less, preferably 18 hours or less, more preferably 12 hours or less, even more preferably 4 hours or less, still more preferably 2 hours or less.

When irradiating the reaction product (c) with electromagnetic waves, the electromagnetic waves may be irradiated while rotating a container including the reaction product (c), or the electromagnetic waves may be irradiated while stirring the reaction product (c). This allows the reaction product (c) to be irradiated with the electromagnetic waves more uniformly.

In addition, when irradiating the reaction product (c) with electromagnetic waves, the reaction product (c) may be irradiated with the electromagnetic waves while the reaction product (c) is conveyed by a belt conveyor or the like. This allows continuous irradiation of the electromagnetic waves to the reaction product (c).

A surface temperature of the reaction product (c) in the step (A), i.e., the surface temperature of the reaction product (c) when carbon dioxide is desorbed, is preferably 35°C or more, more preferably 40°C or more, even more preferably 50°C or more, still more preferably 55°C or more, from a viewpoint of further improving carbon dioxide desorption performance, and is preferably 120°C or less, more preferably 110°C or less, even more preferably 100°C or less, still more preferably 90°C or less, from a viewpoint of suppressing the deterioration of the amine compound (a) and an amount of energy consumption.

In other words, it is preferable that the surface temperature of the reaction product (c) in the step (A) is adjusted so that the surface temperature of the reaction product (c) is within the above range. A method for adjusting the surface temperature of the reaction product (c) is not limited, and can be appropriately selected depending on the type or the like of electromagnetic waves to be irradiated, and includes, e.g., a method for adjusting irradiation conditions of electromagnetic waves, or a method for adjusting an outside temperature by using an oil bath, a hot air dryer or the like. Above all, the irradiation conditions of electromagnetic waves are preferably adjusted, and the adjustment may be performed in combination with other temperature adjusting methods as necessary.

Here, the surface temperature of the reaction product (c) can be measured by an infrared thermometer (IR sensor).

The amine compound (a) after the carbon dioxide is desorbed can be reused as the carbon dioxide absorbent.

### <Step (B)>

The method for capturing carbon dioxide with respect to the present invention comprises a step (B) of preparing the reaction product (c) prior to the step (A).

In the step (B) the reaction product (c) is obtained through contacting the carbon dioxide absorbent comprising the amine compound (a) with the gas (b).

A method for contacting the carbon dioxide absorbent comprising the amine compound (a) with the gas (b) containing carbon dioxide is not limited as long as it is a method which the carbon dioxide can react with the amine compound (a), but includes, e.g., a method in which the carbon dioxide absorbent is left in the gas (b), a method in which the gas (b) is bubbled into the carbon dioxide absorbent, a method in which the carbon dioxide absorbent is sprayed to the gas (b), a method in which a material impregnated or gelled with the carbon dioxide absorbent is contacted with the gas (b), and a method in which a carbon dioxide absorbent mist generated by ultrasonic waves or the like is contacted with the gas (b).

In the step (B), time for contacting the carbon dioxide absorbent comprising the amine compound (a) with the gas (b) containing carbon dioxide may be appropriately adjusted depending on a contact method, but is, e.g., 1 hour or more, preferably 10 hours or more, more preferably 30 hours or more, and even more preferably 50 hours or more, from a viewpoint of further improving a reaction amount of carbon dioxide. Still, an upper limit of the above time to be contacted is not limited, but is, e.g., 200 hours or less.

In the step (B), a temperature when contacting the carbon dioxide absorbent comprising the amine compound (a) with the gas (b) containing carbon dioxide is not limited, but is preferably 10°C or more, more preferably 15°C or more, even more preferably 20°C or more, from a viewpoint of further improving a reaction rate, and is preferably 60°C or less, more preferably 50°C or less, even more preferably 45°C or less, from the viewpoint of further improving the reaction amount of carbon dioxide.

The step (B) and the step (A) are performed continuously or stepwise in different containers or apparatuses. In addition, the step (B) and the step (A) may be performed continuously or stepwise at the same location, or they may be performed stepwise at different locations.

The aspect which the step (B) and the step (A) are performed in different containers is not limited, but includes, e.g., the following "Case".

"Case": the gas (b) is bubbled to the carbon dioxide absorbent comprising the amine compound (a) filled in a first container, thereby contacting the carbon dioxide absorbent with the gas (b), to obtain the reaction product (c) (step (B)). Then, the reaction product (c) obtained is moved to a second container, and the reaction product (c) is irradiated with electromagnetic waves to desorb carbon dioxide from the reaction product (c) (step (A)). In the aspect of this "Case", a step of separating the amine compound (a) and the reaction product (c) is performed between the step (B) and the step (A). In this case, the separated reaction product (c) is moved to the second container, and the amine compound (a) is returned to the first container for reuse.

### (Carbon Dioxide Absorbent)

The carbon dioxide absorbent with respect to the present invention comprises the amine compound (a).

The amine compound (a) is not limited as long as it is an amine compound that can absorb carbon dioxide, but examples include acyclic aliphatic amine compounds, amine compounds having a cyclic structure, and from a viewpoint of improving balance of a carbon dioxide absorption capacity and thermal stability, the amine compounds having the cyclic structure are more preferable. Examples of the cyclic structure include, e.g., an alicyclic hydrocarbon structure, an aromatic hydrocarbon structure, a heterocyclic structure containing heteroatoms in the ring.

In addition, the amine compounds (a) having the cyclic structure may be any of a cis-isomer, a trans-isomer or a mixture of the cis-isomer and the trans-isomer.

The cyclic structure of the amine compound (a) preferably comprises at least one selected from the group consisting of a 5-membered ring and a 6-membered ring, more preferably the 6-membered ring, from the viewpoint of further improving the carbon dioxide absorption capacity.

Amino groups in the amine compound (a) are preferably 1 or more, more preferably 2 or more, and preferably 6 or less, more preferably 4 or less, even more preferably 3 or less, still more preferably 2, from the viewpoint of further improving the carbon dioxide absorption capacity.

In addition, as the amino group, from a viewpoint of further improving an amount of carbon dioxide absorbed, preferable is an amino group having a nitrogen-hydrogen bond, and more preferable is a primary amino group.

Acyclic aliphatic amine compounds include, e.g., monoethanolamine, 2-amino-2-methyl-1-propanol, diethanolamine, 2-(methylamino)ethanol, 2-(ethylamino)ethanol, 2-(dimethylamino)ethanol, 2-(diethylamino)ethanol, ethylenediamine, N,N'-dimethylethylenediamine, diethylenetriamine.

As the amine compounds (a), from the viewpoint of further improving the carbon dioxide absorption capacity, preferable is at least one selected from the group consisting of o-xylylenediamine and derivatives thereof, m-xylylenediamine and derivatives thereof, p-xylylenediamine and derivatives thereof, bis(aminomethyl)cyclohexane and derivatives thereof, limonenediamine and derivatives thereof, isophoronediamine and derivatives thereof, 2,5-bisaminomethylfuran and derivatives thereof, 2,5-bis(aminomethyl)tetrahydrofuran and derivatives thereof, furfurylamine and derivatives thereof, tetrahydrofurfurylamine and derivatives thereof, 4-aminomethyltetrahydropyran and derivatives thereof, 4-(2-aminoethyl)morpholine and derivatives thereof, and 2-thiophenemethylamine and derivatives thereof, more preferable is at least one selected from the group consisting of the o-xylylenediamine and derivatives thereof, the m-xylylenediamine and derivatives thereof, the p-xylylenediamine and derivatives thereof, and the bis(aminomethyl)cyclohexane and derivatives thereof, even more preferable is at least one selected from the group consisting of the m-xylylenediamine and derivatives thereof and 1,3-bis(aminomethyl)cyclohexane and derivatives thereof, still more preferable is at least one selected from the group consisting of the m-xylylenediamine and the 1,3-bis(aminomethyl)cyclohexane.

Here, the derivatives of the above various amines include, for example, a compound in which at least one of the hydrogen atoms in the amino group is substituted by a hydrocarbon group having 1 or more and 10 or less carbon atoms, and optionally having at least one substituent selected from the group consisting of the amino group, a cyano group and a phenyl group, preferably an alkyl group having 1 or more and 4 or less carbon atoms, and optionally having at least one substituent selected from the group consisting of the amino group, the cyano group and the phenyl group, more preferably the alkyl group having 1 or more and 4 or less carbon atoms, and optionally having at least one substituent selected from the group consisting of the amino group and the cyano group, even more preferably the alkyl group having 2 or more and 4 or less carbon atoms, and optionally having at least one substituent selected from the group consisting of the amino group and the cyano group.

Also, the derivatives of the above various amines include, for example, a compound in which at least some of the hydrogen atoms of the cyclic structure are substituted by the hydrocarbon group having 1 or more and 4 or less carbon atoms, preferably the alkyl group having 1 or more and 3 or less carbon atoms, more preferably a methyl group or an ethyl group, even more preferably the methyl group.

Amine compounds (a) can be used alone or in combination of two or more.

A content of the amine compound (a) in the carbon dioxide absorbent with respect to the present invention is, from the viewpoint of improving the carbon dioxide absorption capacity, when a total amount of the carbon dioxide absorbent is 100% by mass, preferably 50% by mass or more, more preferably 60% by mass or more, even more preferably 70% by mass or more, still more preferably 80% by mass or more, yet more preferably 90% by mass or more, even much more preferably 95% by mass or more, still much more preferably 98% by mass or more, and preferably 100% by mass or less.

In addition, the content of the amine compound (a) in the carbon dioxide absorbent with respect to the present invention is, from the viewpoint of further improving the carbon dioxide absorption capacity, when the total amount of the amine compound included in the carbon dioxide absorbent is 100 parts by mass, preferably 50 parts by mass or more, more preferably 60 parts by mass or more, even more preferably 70 parts by mass or more, still more preferably 80 parts by mass or more, yet more preferably 90 parts by mass or more, even much more preferably 95 parts by mass or more, and preferably 100 parts by mass or less.

A content of water in the carbon dioxide absorbent with respect to the present invention is, from the viewpoint of improving absorption capability of carbon dioxide, preferably 30% by mass or less, more preferably 15% by mass or less, even more preferably 10% by mass or less, still more preferably 5% by mass or less, yet more preferably 1% by mass or less, even much more preferably 0.5% by mass or less, still much more preferably 0.1% by mass or less, yet much more preferably 0.01% by mass or less, and it is even still much more preferable that the carbon dioxide absorbent with respect to the present invention is substantially free of water. Here, "substantially free of water" means that water is not intentionally added and does not exclude the presence of a small amount of water as an impurity.

The maximum carbon dioxide release temperature of the amine compound (a) as measured by the following method is, from the viewpoint of improving the carbon dioxide desorption performance, preferably 150°C or less, more preferably 145°C or less, even more preferably 140°C or less. A lower limit of the above maximum carbon dioxide release temperature is not limited, but is, e.g., 40°C or more.

### (Method)

Heating the amine compound (a) with carbon dioxide absorbed from 23°C to 250°C at a heating rate of 10°C/minute under a condition of a nitrogen atmosphere, measuring a temperature at which an endothermic amount associated with desorption of carbon dioxide reaches a maximum, and taking this temperature as the maximum carbon dioxide release temperature. The measurement can be performed by using a differential thermogravimetric instrument (e.g., DTG-60, produced by Shimadzu Corporation), and the temperature at which the endothermic amount associated with the desorption of carbon dioxide is reached the maximum can be calculated from a DTA curve obtained. Here, the amine compound (a) with carbon dioxide absorbed can be prepared, for example, by allowing 5 mmol of the amine compound (a) to stand in the air at 23°C and 50% RH for 24 hours.

An acid dissociation constant (pKa) of the amine compound (a) is, from the viewpoint of improving the absorption capability of carbon dioxide, preferably 8.0 or more, more preferably 9.0 or more, and even more preferably 9.3 or more, and from the viewpoint of improving the carbon dioxide desorption performance, preferably 12.0 or less. In the present description, the acid dissociation constant of the amine compound (a) is a value obtained by the following measurement method based on an acid-base titration method.
(1) Dissolving 0.2 g of the amine compound (a) in 30 mL of purified water.
(2) Calculating the acid dissociation constant (pKa) by titrating the solution obtained in the above (1) with 0.1 N perchloric acid-acetic acid solution using an automatic potentiometric titrator (for example, AT-610 produced by Kyoto Electronics Manufacturing Co., Ltd.).

Still, let a temperature at a time of measurement be 25±2°C.

A molecular weight of the amine compound (a) is preferably 50 or more, more preferably 80 or more, even more preferably 100 or more, still more preferably 120 or more, yet more preferably 130 or more, from viewpoints of suppressing weight loss during heat treatment when releasing carbon dioxide, and further improving the repeated usability, and is preferably 1,000 or less, more preferably 500 or less, even more preferably 300 or less, still more preferably 250 or less, yet more preferably 200 or less, even much more preferably 150 or less, from the viewpoint of further improving the carbon dioxide absorption capacity.

The maximum endothermic temperature of the amine compound (a) as measured by the following method is preferably 130°C or more, more preferably 140°C or more, even more preferably 150°C or more, still more preferably 155°C or more, from the viewpoints of suppressing weight loss during heat treatment when releasing carbon dioxide, and further improving the repeated usability, and is preferably 300°C or less, more preferably 250°C or less, even more preferably 200°C or less, from the viewpoint of further improving the carbon dioxide absorption capacity.

### (Method)

Heating the amine compound (a) from 23°C to 350°C at a heating rate of 10°C/minute under a condition of a nitrogen atmosphere, measuring a temperature at which an endothermic amount associated with volatilization of the amine compound (a) reaches a maximum, and taking this temperature as the maximum endothermic temperature of the amine compound (a). The measurement can be performed by using the differential thermogravimetric instrument (e.g., DTG-60, produced by Shimadzu Corporation), and the temperature at which the endothermic amount associated with the volatilization of the amine compound (a) is reached the maximum can be calculated from a DTA curve obtained.

An amine value of the amine compound (a) is, from the viewpoint of further improving the absorption capability of carbon dioxide , preferably 500 mgKOH/g or more, more preferably 550 mgKOH/g or more, even more preferably 600 mgKOH/g or more, still more preferably 700 mgKOH/g or more, and, preferably 1,500 mgKOH/g or less, more preferably 1,200 mgKOH/g or less, even more preferably 1,000 mgKOH/g or less, still more preferably 900 mgKOH/g or less. The amine value indicates an amount of the amine in the compound and is number of milligrams of potassium hydroxide (KOH) of an equivalent amount to acid required to neutralize 1 g amount of the compound.

The amine value can be measured by the following method in accordance with JIS K7237-1995.
(1) Dissolving 0.1 g of the amine compound (a) in 20 mL of acetic acid.
(2) Calculating the amine value by titrating the solution obtained in the above (1) with the 0.1 N perchloric acid-acetic acid solution using the automatic potentiometric titrator (for example, AT-610 produced by Kyoto Electronics Manufacturing Co., Ltd.).

The carbon dioxide absorbent with respect to the present invention may comprise a component other than the amine compound (a), as appropriate, to the extent that the effect of the invention is not impaired. Examples of components other than the amine compound (a) include a compound capable of absorbing carbon dioxide other than the amine compound (a) (e.g., methanol, polyethylene glycol), a carbon dioxide absorbent (e.g., zeolite, activated carbon, graphite, carbon fibers, carbon nanotubes, molecular sieves, metal oxide), water, an organic solvent, a deterioration inhibitor, a defoaming agent, a viscosity adjuster, an antioxidant, a desiccant for removing moisture (e.g., magnesium sulfate, molecular sieves).

Organic solvents include, e.g., an alcohol, dimethylacetamide, N-methylpyrrolidone, and dimethylformamide.

### (Gas (b))

The gas (b) is not limited as long as it is a gas containing carbon dioxide, but includes, e.g., air, an exhaust gas exhausted from thermal power plants and factories.

Since the method for capturing carbon dioxide with respect to the present invention can be suitably used for technology of directly absorbing carbon dioxide from the air (DAC), the gas (b) is preferably a gas of which a concentration of carbon dioxide is 0.01% by volume or more and 1% by volume or less, or the air, more preferably the air.

### (Reaction Product (c))

The reaction product (c) is a reaction product of the amine compound (a) and the gas (b) containing carbon dioxide, and includes, e.g., at least one selected from the group consisting of carbamic acid, a carbamate, a carbonate, a hydrogencarbonate, etc., which are reaction products of the amine compound (a) and carbon dioxide.

The reaction product (c) is in a solid state at 23°C from the viewpoint of further improving the carbon dioxide desorption performance in the step (A). Also, if the reaction product (c) is in the solid state at 23°C, the amine compound (a) and the reaction product (c) can be easily separated, thereby improving recyclability of the amine compound (a).

### [Carbon Dioxide Capture System]

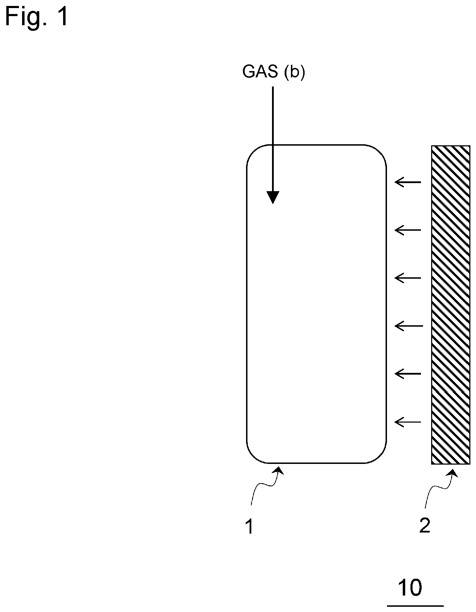

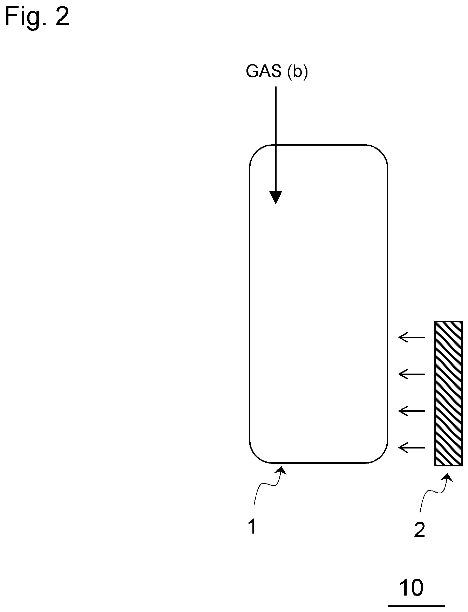

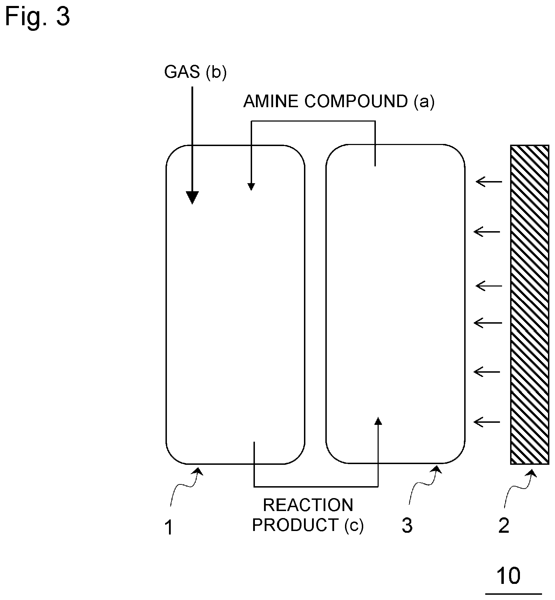

Figs. 1 to 3 show schematic diagrams each showing an example of a carbon dioxide capture system 10 with respect to the present disclosure (Figs. 1 and 2) or invention (Fig. 3).

The carbon dioxide capture system 10 comprises housing parts 1, 3 for housing the reaction product (c) of the amine compound (a) and the gas (b) containing carbon dioxide, and an electromagnetic wave irradiation part 2 for irradiating the reaction product (c) with electromagnetic waves.

According to the carbon dioxide capture system 10 , the carbon dioxide desorption temperature can be lowered. According to the carbon dioxide capture system 10 , this allows to perform desorption of carbon dioxide at a lower temperature, compared with the desorption of carbon dioxide by heating using hot air performed conventionally, resulting in suppressing deterioration of the carbon dioxide absorbent comprising the amine compound (a) to improve the repeated usability of the carbon dioxide absorbent.

The electromagnetic wave irradiation part 2 is arranged such that the electromagnetic waves emitted from the electromagnetic wave irradiation part 2 can irradiate the housing parts 1 and 3. In Figs 1 to 3, the electromagnetic wave irradiation part 2 is arranged outside the housing parts 1 and 3, but in case of a configuration which the electromagnetic wave irradiation part 2 can be accommodated inside the housing parts 1 and 3 (for example, in case that the electromagnetic wave irradiation part 2 is the ultraviolet irradiation device), the electromagnetic wave irradiation part 2 may be arranged inside the housing parts 1 and 3.

The carbon dioxide capture system 10 provides with the electromagnetic wave irradiation part 2 for irradiating the reaction product (c) with electromagnetic waves, and thus can be suitably used in the method for capturing carbon dioxide with respect to the present invention as described above.

The carbon dioxide capture system 10 shown in Fig. 2 (according the present disclosure) can be used, for example, where the above-described step (B) and step (A) are performed in the same container.

Specifically, the gas (b) is bubbled to the carbon dioxide absorbent comprising the amine compound (a) filled in the housing part 1 (container), thereby contacting the carbon dioxide absorbent with the gas (b), to obtain the reaction product (c) (step (B)). As the reaction proceeds, since the reaction product (c) produced precipitates in the housing part 1, a layer containing a higher amount of the carbon dioxide absorbent is formed in an upper part of the housing part 1, and a layer containing a higher amount of the reaction product (c) is formed in a lower part of the housing part 1. Then irradiating the layer containing a more amount of the reaction product (c) with electromagnetic waves allows to desorb carbon dioxide from the reaction product (c) (step (A)).

The carbon dioxide capture system 10 shown in Fig. 3 is according to the present invention and the above "Case" of the aspect where the above-described step (B) and step (A) are performed in different containers.

Specifically, the gas (b) can be bubbled to the carbon dioxide absorbent comprising the amine compound (a) filled in the housing part 1 (first container), thereby contacting the carbon dioxide absorbent with the gas (b), to obtain the reaction product (c) (step (B)). Then, the reaction product (c) obtained can be moved to a housing part 3 (second container), and the reaction product (c) is irradiated with electromagnetic waves to desorb carbon dioxide from the reaction product (c) (step (A)). In the aspect of the "Case", it may be provided with a separation part in which the amine compound (a) and the reaction product (c) can be separated between the step (B) and the step (A). In this case, the separated reaction product (c) can be moved to the housing part 3, and the amine compound (a) can be returned to the housing part 1 for reuse.

Shapes of the housing part 1 and the housing part 3 are not limited as long as the carbon dioxide absorbent or the reaction product (c) can be housed, and include, e.g., a cylindrical shape, a rectangular-tube shape, and the like.

Materials of the housing part 1 and the housing part 3 are not limited as long as it is possible to transmit the electromagnetic waves irradiated, but it is preferable that it is resistant to the electromagnetic waves irradiated.

The type of electromagnetic waves irradiated by the electromagnetic wave irradiation part 2 in the carbon dioxide capture system 10 with respect to the present invention and its suitable aspect are the same as those in the method for capturing carbon dioxide with respect to the present invention described above.

Suitable aspects of the carbon dioxide absorbent, the amine compound (a), the gas (b) containing carbon dioxide, and the reaction product (c) in the carbon dioxide capture system 10 with respect to the present invention are the same as those in the method for capturing carbon dioxide with respect to the present invention described above.

### Examples

Hereinafter, the present invention will be described with reference to examples, but the present invention is not limited to the scope of the examples.

### [Measurement Method]

Measurements of various physical properties of the amine compound (a) were performed by the following methods.

### (Acid Dissociation Constant (pKa) of Amine Compound (a))

The acid dissociation constant of the amine compound (a) was determined by the following method.
(1) Dissolving 0.2 g of the amine compound (a) in 30 mL of the purified water.
(2) Calculating the acid dissociation constant (pKa) by titrating the solution obtained in the above (1) with the 0.1 N perchloric acid-acetic acid solution using the automatic potentiometric titrator (AT-610 produced by Kyoto Electronics Manufacturing Co., Ltd.).

Still, let the temperature at the time of measurement be 25±2°C.

### (Amine Value of Amine Compound (a))

The amine value was measured by the following measurement method in accordance with JIS K7237-1995.
(1) Dissolving 0.1 g of the amine compound (a) in 20 mL of the acetic acid.
(2) Calculating the amine value by titrating the solution obtained in the above (1) with the 0.1 N perchloric acid-acetic acid solution using the automatic potentiometric titrator (AT-610 produced by Kyoto Electronics Manufacturing Co., Ltd.).

### (Maximum Endothermic Temperature of Amine Compound (a))

TG-DTA measurements were performed on the amine compounds (a) to measure the maximum endothermic temperature of the amine compounds (a) as follows. First, a differential scanning calorimetry was performed on the amine compounds (a) using a differential thermogravimetric analyzer (Product Name: DTG-60 produced by Shimadzu Corporation) under conditions of 23 to 350°C of a measurement temperature range, 10°C/min of a heating rate, and a nitrogen atmosphere. From the DTA curve obtained thereby, the temperature at which the endothermic amount associated with the volatilization of the amine compound (a) reached the maximum was calculated, and the temperature thereof was used as the maximum endothermic temperature of the amine compound (a).

### (Maximum Carbon Dioxide (CO₂) Release Temperature of Amine Compound (a))

A carbon dioxide concentration meter and a petri dish were placed inside an openable desiccator (Internal Dimension: 370 mm x 260 mm x 272 mm). The amine compound (a) (5 mmol) was then added to the petri dish in the desiccator; a door was immediately closed; and the amine compound (a) was stood in the desiccator at 23°C for 24 hours under an air environment of 50% RH.

Then, the amine compound (a) was removed from the desiccator as the amine compound (a) having carbon dioxide absorbed. The TG-DTA measurement was performed on the amine compound (a) with carbon dioxide absorbed as follows, to measure the maximum carbon dioxide release temperature of the amine compound (a). First, the differential scanning calorimetry was performed on the amine compound (a) using the differential thermogravimetric analyzer (Product Name: DTG-60 produced by Shimadzu Corporation) under the conditions of 23 to 250°C of a measurement temperature range, 10°C/min of the heating rate, and the nitrogen atmosphere. From the DTA curve obtained thereby, the temperature at which the endothermic amount associated with the desorption of carbon dioxide reached the maximum was calculated, and the temperature thereof was used as the maximum carbon dioxide release temperature of the amine compound (a).

In Examples and Comparative Examples, the following amine compounds (a) were used.

### (Amine Compound (a))

MXDA: m-xylylenediamine (produced by Mitsubishi Gas Chemical Company Inc., molecular weight: 136.2, pKa: 9.5, amine value: 824 mgKOH/g, maximum CO₂ release temperature:
135.5°C, maximum endothermic temperature: 183.5°C)
1,3-BAC: 1,3-bis(aminomethyl)cyclohexane (produced by Mitsubishi Gas Chemical Company, Inc., molecular weight: 142.2, pKa: 10.8, amine value: 789 mgKOH/g, maximum CO₂ release temperature: 125.7°C, maximum endothermic temperature: 160.9°C)

### Example 1

50 g of a carbon dioxide absorbent having 100% by mass of a content of the amine compound (a) shown in Table 1 was stood at 23°C for 60 hours under the air environment of 50% RH, and the amine compound (a) was reacted with carbon dioxide in the air to obtain the reaction product (c) in the solid state.

3 g of the reaction product (c) obtained was then filled in a glass bottle and irradiated with microwaves using a microwave synthesizer produced by Biotage AB under conditions of a single mode and 2.45 GHz of the frequency for 60 minutes. The microwave power output was adjusted in a range of 10 W or more and 220 W or less so that a surface temperature of the reaction product (c) was 60°C.

Here, the surface temperature of the reaction product (c) was confirmed by measuring the inside of the glass bottle with the IR sensor.

Then, according to the following criteria, the carbon dioxide desorption performance was evaluated. The result is shown in Table 1.

### (Evaluation of Carbon Dioxide Desorption Performance)

A: carbon dioxide was desorbed from the reaction product (c), and the reaction product (c) in the solid state became that in a liquid state
B: there was no change in a state of the reaction product (c)

### Examples 2 to 4

The carbon dioxide desorption performances were evaluated in the same manner as that in Example 1 except that the amine compounds (a) shown in Table 1 were used, and the microwave power outputs were adjusted in the range of 10 W or more and 300 W or less so that the surface temperatures of the reaction products (c) reached temperatures described in Table 1. The results are shown in Table 1.

### Example 5

The reaction product (c) in the solid state was obtained in the same manner as that in Example 1. Then, 3 g of the reaction product (c) obtained was filled in the glass bottle, and while immersing in an oil bath, irradiated with the ultraviolet light for 60 minutes under the conditions of 365 nm of a dominant wavelength and 2.5 mW/cm² of the illuminance using an ultraviolet irradiation device equipped with a high-pressure mercury lamp (HL100GL-1, produced by SEN LIGHTS Corporation). During this time, a temperature of the oil bath was adjusted so that the surface temperature of the reaction product (c) was 40°C.

The carbon dioxide desorption performance was then evaluated in the same manner as that in Example 1. The result is shown in Table 1.

### Examples 6 to 8

The carbon dioxide desorption performances were evaluated in the same manner as that in Example 1 except that the amine compounds (a) shown in Table 1 were used, and the temperatures of the oil bath were adjusted so that the surface temperatures of the reaction products (c) reached the temperatures described in Table 1. The results are shown in Table 1.

### Comparative Example 1

The reaction product (c) in the solid state was obtained in the same manner as that in Example 1. Then, 3 g of the reaction product (c) obtained was filled in the glass bottle, placed in a hot air dryer, and heated for 60 minutes under the condition such that the surface temperature of the reaction product (c) reached 60°C.

The carbon dioxide desorption performance was then evaluated in the same manner as that in Example 1. The result is shown in Table 1.

### Comparative Examples 2 to 4

The carbon dioxide desorption performances were evaluated in the same manner as that in Comparative Example 1 except that the amine compounds (a) shown in Table 1 were used, and the conditions of the hot air dryer were adjusted so that the surface temperatures of the reaction products (c) reached the temperatures described in Table 1. The results are shown in Table 1.

**Table 1**

| | Amine Compound (a) | CO₂ Desorption Method | Surface Temperature of Reaction Product (c) [°C] | Evaluation of CO₂ Desorption Performance |
|---|---|---|---|---|
| Example 1 | MXDA | Microwave Irradiation | 60 | A |
| Example 2 | MXDA | Microwave Irradiation | 80 | A |
| Example 3 | 1,3-BAC | Microwave Irradiation | 60 | A |
| Example 4 | 1,3-BAC | Microwave Irradiation | 80 | A |
| Example 5 | MXDA | Ultraviolet Irradiation | 40 | A |
| Example 6 | MXDA | Ultraviolet Irradiation | 60 | A |
| Example 7 | 1,3-BAC | Ultraviolet Irradiation | 40 | A |
| Example 8 | 1,3-BAC | Ultraviolet Irradiation | 60 | A |
| Comparative Example 1 | MXDA | Heating by Hot Air | 60 | B |
| Comparative Example 2 | MXDA | Heating by Hot Air | 80 | B |
| Comparative Example 3 | 1,3-BAC | Heating by Hot Air | 60 | B |
| Comparative Example 4 | 1,3-BAC | Heating by Hot Air | 80 | B |

In the method using microwave irradiation in Examples 1 to 4 and the method using ultraviolet light irradiation in Examples 5 to 8, the desorption of carbon dioxide proceeded. On the other hand, in the heating method using the hot air in Comparative Examples 1 to 4, the desorption of carbon dioxide did not proceed at 60°C and 80°C of the surface temperatures of the reaction products (c).

From the above results, it is understood that the method for capturing carbon dioxide with respect to the present invention enables desorption of carbon dioxide at lower temperatures compared with the desorption of carbon dioxide by heating using the hot air performed conventionally.

### Reference Signs List

- 1: housing part
- 2: electromagnetic wave irradiation part
- 3: housing part
- 10: carbon dioxide capture system

## Claims

1. A method for capturing carbon dioxide comprising
a step (A) of irradiating a reaction product (c) of an amine compound (a) and a gas (b) comprising carbon dioxide with electromagnetic waves to desorb carbon dioxide from the reaction product (c), and
a step (B) of preparing the reaction product (c) prior to the step (A),
wherein in the step (B), a carbon dioxide absorbent comprising the amine compound (a) is contacted with the gas (b) to obtain the reaction product (c), wherein the reaction product (c) is in a solid state at 23°C,
wherein, between the step (B) and the step (A), the amine compound (a) and the reaction product (c) are separated.

2. The method for capturing carbon dioxide according to claim 1, wherein the gas (b) is air.

3. The method for capturing carbon dioxide according to claim 1 or 2, wherein the molecular weight of the amine compound (a) is 50 or more and 1,000 or less.

4. The method for capturing carbon dioxide according to any one of claims 1 to 3, wherein a maximum carbon dioxide release temperature of the amine compound (a) is 150°C or less as measured by the following method,
the method comprising:
heating the amine compound (a) with carbon dioxide absorbed from 23°C to 250°C at a heating rate of 10°C/minute;
measuring a temperature at which an endothermic amount associated with desorption of the carbon dioxide reaches a maximum; and
taking the temperature as a maximum carbon dioxide release temperature.

5. The method for capturing carbon dioxide according to any one of claims 1 to 4, wherein an amine value of the amine compound (a) is 500 mgKOH/g or more and 1,500 mgKOH/g or less wherein the amine value is measured as explained in the specification.

6. The method for capturing carbon dioxide according to any one of claims 1 to 5, wherein the electromagnetic waves are at least one type selected from the group consisting of microwaves, ultraviolet light, infrared light, gamma rays, electron beams, and X-rays.

7. The method for capturing carbon dioxide according to any one of claims 1 to 6, wherein in the step (A), the surface temperature of the reaction product (c) is 35°C or more and 120°C or less.

8. A carbon dioxide capture system, comprising
a housing part for housing a reaction product (c) of an amine compound (a) and a gas (b) containing carbon dioxide,
a separation part to separate amine compound (a) and reaction product (c), and
an electromagnetic wave irradiation part for irradiating the reaction product (c) with electromagnetic waves,
wherein the carbon dioxide capture system is configured to irradiate a reaction product that is in a solid state at 23°C.

9. The carbon dioxide capture system according to claim 8, wherein the electromagnetic waves are at least one type selected from the group consisting of microwaves, ultraviolet light, infrared light, gamma rays, electron beams, and X-rays.

10. Use of the carbon dioxide capture system according to claim 8 or 9 in the method for capturing carbon dioxide according to any one of claims 1 to 7.

## Patentansprüche

1. Verfahren zur Abscheidung von Kohlendioxid, umfassend
einen Schritt (A) zum Bestrahlen eines Reaktionsprodukts (c) einer Aminverbindung (a) und eines Gases (b), das Kohlendioxid umfasst, mit elektromagnetischen Wellen, um Kohlendioxid aus dem Reaktionsprodukt (c) zu desorbieren, und
einen Schritt (B) zum Herstellen des Reaktionsprodukts (c) vor Schritt (A),
wobei im Schritt (B) ein Kohlendioxid-Absorptionsmittel, das die Aminverbindung (a) umfasst, mit dem Gas (b) in Kontakt gebracht wird, um das Reaktionsprodukt (c) zu erhalten, wobei das Reaktionsprodukt (c) bei 23°C in einem festen Zustand vorliegt,
wobei zwischen dem Schritt (B) und dem Schritt (A) die Aminverbindung (a) und das Reaktionsprodukt (c) getrennt werden.

2. Verfahren zur Abscheidung von Kohlendioxid gemäß Anspruch 1, wobei das Gas (b) Luft ist.

3. Verfahren zur Abscheidung von Kohlendioxid gemäß Anspruch 1 oder 2, wobei das Molekulargewicht der Aminverbindung (a) 50 oder mehr und 1.000 oder weniger beträgt.

4. Verfahren zur Abscheidung von Kohlendioxid gemäß einem der Ansprüche 1 bis 3, wobei eine maximale Kohlendioxid-Freisetzungstemperatur der Aminverbindung (a) 150°C oder weniger, gemessen durch das folgende Verfahren, beträgt,
wobei das Verfahren umfasst:
Erwärmen der Aminverbindung (a) mit absorbiertem Kohlendioxid von 23°C auf 250°C bei einer Erwärmungsgeschwindigkeit von 10°C/Minute,
Messen einer Temperatur, bei der der mit der Desorption des Kohlendioxids verbundene endotherme Betrag ein Maximum erreicht, und
Annehmen der Temperatur als maximale Kohlendioxid-Freisetzungstemperatur.

5. Verfahren zur Abscheidung von Kohlendioxid gemäß einem der Ansprüche 1 bis 4, wobei eine Aminzahl der Aminverbindung (a) 500 mgKOH/g oder mehr und 1.500 mg/KOH oder weniger beträgt, wobei die Aminzahl durch das folgende Messverfahren gemäß JIS K7237-1995 gemessen wird.
(1) Lösen von 0,1 g der Aminverbindung (a) in 20 ml Essigsäure.
(2) Berechnen der Aminzahl durch Titrieren der oben unter (1) erhaltenen Lösung mit 0,1 N-Perchlorsäure-Essigsäure-Lösung unter Verwendung des automatischen potentiometrischen Titriergeräts.

6. Verfahren zur Abscheidung von Kohlendioxid gemäß einem der Ansprüche 1 bis 5, wobei die elektromagnetischen Wellen mindestens ein Typ, ausgewählt aus der Gruppe, bestehend aus Mikrowellen, ultraviolettem Licht, Infrarotlicht, Gammastrahlen, Elektronenstrahlen und Röntgenstrahlen, sind.

7. Verfahren zur Abscheidung von Kohlendioxid gemäß einem der Ansprüche 1 bis 6, wobei in Schritt (A) die Oberflächentemperatur des Reaktionsprodukts (c) 35°C oder mehr und 120°C oder weniger beträgt.

8. Kohlendioxidabscheidungssystem, umfassend
ein Gehäuseteil zur Aufnahme eines Reaktionsprodukts (c) einer Aminverbindung (a) und eines Gases (b), das Kohlendioxid enthält,
ein Trennungsteil zur Trennung der Aminverbindung (a) und des Reaktionsprodukts (c) und
ein Teil zur Bestrahlung mit elektromagnetischen Wellen zur Bestrahlung des Reaktionsprodukts (c) mit elektromagnetischen Wellen,
wobei das Kohlendioxidabscheidungssystem so konfiguriert ist, dass es ein Reaktionsprodukt (c) bestrahlt, das bei 23°C in einem festen Zustand vorliegt.

9. Kohlendioxidabscheidungssystem gemäß Anspruch 8, wobei die elektromagnetischen Wellen mindestens ein Typ, ausgewählt aus der Gruppe, bestehend aus Mikrowellen, ultraviolettem Licht, Infrarotlicht, Gammastrahlen, Elektronenstrahlen und Röntgenstrahlen, sind.

10. Verwendung des Kohlendioxidabscheidungssystems gemäß Anspruch 8 oder 9 in dem Verfahren zur Abscheidung von Kohlendioxid gemäß einem der Ansprüche 1 bis 7.

## Revendications

1. Procédé de capture du dioxyde de carbone comprenant une étape (A) d'irradiation d'un produit de réaction (c) d'un composé aminé (a) et d'un gaz (b) comprenant du dioxyde de carbone avec des ondes électromagnétiques afin de désorber le dioxyde de carbone du produit de réaction (c), et
une étape (B) de préparation du produit de réaction (c) avant l'étape (A),
dans lequel, dans l'étape (B), un absorbant de dioxyde de carbone comprenant le composé aminé (a) est mis en contact avec le gaz (b) pour obtenir le produit de réaction (c), dans laquelle le produit de réaction (c) est à l'état solide à 23 °C,
dans lequel, entre l'étape (B) et l'étape (A), le composé aminé (a) et le produit de réaction (c) sont séparés.

2. Le procédé de capture du dioxyde de carbone selon la revendication 1, dans lequel le gaz (b) est de l'air.

3. Le procédé de capture du dioxyde de carbone selon la revendication 1 ou 2, dans lequel le poids moléculaire du composé aminé (a) est de 50 à 1000.

4. Le procédé de capture du dioxyde de carbone selon l'une quelconque des revendications 1 à 3, dans lequel la température maximale de libération du dioxyde de carbone du composé aminé (a) est inférieure ou égale à 150 °C, telle que mesurée par la méthode suivante,
la méthode comprenant :
le chauffage du composé aminé (a) avec du dioxyde de carbone absorbé de 23 °C à 250 °C à une vitesse de chauffage de 10 °C/minute ;
la mesure de la température à laquelle la quantité endothermique associée à la désorption du dioxyde de carbone atteint un maximum ; et
la considération de cette température comme la température maximale de libération du dioxyde de carbone.

5. Le procédé de capture du dioxyde de carbone selon l'une quelconque des revendications 1 à 4, dans lequel l'indice d'amine du composé aminé (a) est de 500 mgKOH/g ou plus et de 1500 mgKOH/g ou moins, l'indice d'amine étant mesuré par la méthode de mesure suivants, conformément à la norme JIS K7237-1995 :
(1) dissolution de 0,1 g du composé aminé (a) dans 20 ml d'acide acétique,
(2) calcul de l'indice d'amine par titrage de la solution obtenue dans le (1) ci-dessus avec la solution d'acide acétique et d'acide perchlorique 0,1 N à l'aide du titrateur potentiométrique automatique.

6. Le procédé de capture du dioxyde de carbone selon l'une quelconque des revendications 1 à 5, dans lequel les ondes électromagnétiques sont au moins un type choisi dans le groupe constitué par les micro-ondes, la lumière ultraviolette, la lumière infrarouge, les rayons gamma, les faisceaux d'électrons et les rayons X.

7. Le procédé de capture du dioxyde de carbone selon l'une quelconque des revendications 1 à 6, dans lequel, dans l'étape (A), la température de surface du produit de réaction (c) est de 35 °C à 120 °C.

8. Système de capture de dioxyde de carbone, comprenant une partie de logement pour loger un produit de réaction (c) d'un composé aminé (a) et d'un gaz (b) contenant du dioxyde de carbone, une partie de séparation pour séparer le composé aminé (a) et le produit de réaction (c), et
une partie d'irradiation par ondes électromagnétiques pour irradier le produit de réaction (c) avec des ondes électromagnétiques,
dans lequel le système de capture de dioxyde de carbone est configuré pour irradier un produit de réaction qui est à l'état solide à 23 °C.

9. Le système de capture de dioxyde de carbone selon la revendication 8, dans lequel les ondes électromagnétiques sont au moins d'un type choisi parmi le groupe comprenant les micro-ondes, la lumière ultraviolette, la lumière infrarouge, les rayons gamma, les faisceaux d'électrons et les rayons X.

10. Utilisation du système de capture de dioxyde de carbone selon la revendication 8 ou 9 dans le procédé de capture de dioxyde de carbone selon l'une quelconque des revendications 1 à 7.
